Europäisches Patentamt

European Patent Office

Office européen des brevets

(19)

(11) Veröffentlichungsnummer: **0 225 561**

**A2**

(12) # EUROPÄISCHE PATENTANMELDUNG

(21) Anmeldenummer: 86116573.6

(22) Anmeldetag: 28.11.86

(51) Int. Cl.⁴ **G01N 21/47 , G01N 33/48**

(30) Priorität: 09.12.85 DE 3543416

(43) Veröffentlichungstag der Anmeldung:
16.06.87 Patentblatt 87/25

(84) Benannte Vertragsstaaten:
AT BE CH DE ES FR GB IT LI NL

(71) Anmelder: HOECHST AKTIENGESELLSCHAFT
Postfach 80 03 20
D-6230 Frankfurt am Main 80(DE)

(72) Erfinder: Gross, Jürgen, Dr.
Frankfurter Strasse 4
D-6238 Hofheim am Taunus(DE)
Erfinder: Karger, Matthias
Richard-Wagner-Strasse 18
D-6239 Kriftel(DE)

(54) Verfahren zum photometrischen Auswerten von Farbfeldern auf Teststreifen.

(57) Bei dem Verfahren zum photometrischen Auswerten von Farbfeldern auf Teststreifen, die zur Analyse von Körperflüssigkeiten Verwendung finden, bei
dem definiertes Licht $\lambda(M)$ einer Lichtquelle senkrecht auf das jeweilige Farbfeld eingestrahlt und
das remittierte bzw. transmittierte Licht empfangen
und in auswertbare Signale umgewandelt wird, wird
zusätzlich zum definierten Licht $\lambda(M)$ definiertes
Licht $\lambda(T)$ einer zweiten Lichtquelle auf das jeweilige
Farbfeld eingestrahlt und das remittierte bzw. transmittierte Licht empfangen und in auswertbare Signale umgewandelt.

EP 0 225 561 A2

## Verfahren zum photometrischen Auswerten von Farbfeldern auf Teststreifen

Die Erfindung betrifft ein Verfahren zum photometrischen Auswerten von Teststreifen die zur Analyse von Körperflüssigkeiten, wie z.B. Urin Verwendung finden, bei dem Fehlfärbungen eines Farbfeldes erkannt werden.

Es ist bekannt Körperflüssigkeiten mittels Teststreifen auf ihre Konzentration z.B. von Zucker, Bilirubin, Urobilinogen, pH-Wert usw. zu untersuchen. Die Teststreifen weisen mehrere Testfelder mit spezifischen Nachweisreagenzien auf, die mit den in der Körperflüssigkeit enthaltenen Stoffen ganz bestimmte Färbungen hervorrufen. Es ist ferner bekannt solche Teststreifen photometrisch, insbesondere remissionsphotometrisch mittels Mehrkanalphotometer zu analysieren. Dabei hat sich herausgestellt, daß das Nachweisreagenz für Urobilinogen, z.B. 3,2'-Dinitro-4-fluor-4'-diazoniumdiphenylamintetrafluoroborat sowohl mit Urobilinogen als auch mit noch nicht näher bestimmten Urininhaltsstoffen jeweils eine spezifische Färbung hervorruft. Enthält die Körperflüssigkeit also diese Inhaltsstoffe kann keine sichere Aussage über das Vorhandensein von Urobilinogen gemacht werden. Fehldiagnosen sind die Folge.

Aufgabe zu vorliegender Erfindung ist es daher, eine Verfahren zu schaffen, das es ermöglicht, Fehlfarben auf den Testfeldern zu erkennen.

Zur Lösung der Aufgabe wird ein Verfahren zum photometrischen Auswerten von Farbfeldern auf Teststreifen der eingangs genannten Art vorgeschlagen, das dadurch gekennzeichnet ist, daß zusätzlich zum definierten Licht $\lambda(M)$ einer Lichtquelle definertes Licht $\lambda(T)$ einer zweiten Lichtquelle auf das jeweilige Farbfeld eingestrahlt und das remittierte bzw. transmittierte Licht empfangen und in auswertbare Signale umgewandelt wird.

Der Vorteil der Erfindung besteht im sicheren Erkennen von Fehlfarben und damit im Vermeiden von Fehldiagnosen unabhängig von der jeweiligen Konzentration des Parameters in der Körperflüssigkeit.

Anhand der Auswertung des Farbfeldes für die Analyse der Körperflüssigkeit auf die Konzentration von Urobilinogen wird die Erfindung näher erläutert. Das Diagramm zeigt die Remission (R) eines Urobilinogentestfeldes unterschiedlicher Urine in Abhängigkeit von der Wellenlänge bei einer bestimmten Konzentration des jeweiligen Parameters in der Körperflüssigkeit. Kurve A zeigt den Remissionsverlauf eines Urines, der keine Inhaltsstoffe aufweist, die mit dem speziellen Reagenz des Urobilinogenfeldes reagieren würden. Kurve B zeigt den Remissionverlauf eines Urines, der eine bestimmte Menge Urobilinogen enthält.

Das Urobilinogen reagiert mit dem spezifischen Reagenz des Testfeldes, das sich rötlich verfärbt. Die Kurve C zeigt den Remissionsverlauf eines Urines, der noch nicht näher bestimmte Urininhaltsstoffe enthält, die mit dem speziellen Reagenz des Urobilinogentestfeldes ebenfalls reagierten; das Testfeld verfärbt sich grünlich.

Zum Auswerten des Urobilinogentestfeldes wird dieses durch eine Lichtquelle mit der Wellenlänge $\lambda(M)$ angestrahlt und das remittierte Licht mit einem Photoempfänger aufgenommen. Die Wellenlänge $\lambda(M)$ wurde so gewählt, daß sich eine möglichst große Differenz zwischen den Remissionen der Kurve A $(R)$ und der Kurve B $(R')$ ergibt. Enthält der Urin noch die anderen nicht näher bestimmten Urininhaltsstoffe, dann reagiert das Urobilinogentestfeld ebenfalls (Kurve C). Das Urobilinogentestfeld verfärbt sich grünlich. Diese Fehlfarbe führt bei $\lambda(M)$ zu einer Remission $R''$, die dann vom Gerät fälschlicherweise als Urobilinogenkonzentration ausgegeben wird. Um dies zu verhindern, wird das Testfeld mit einer zweiten Lichtquelle mit der Wellenlänge $\lambda(T)$ angestrahlt. $\lambda(T)$ wurde so gewählt, daß die Remission bei bei einem Urin ohne Urobilinogen (Kurve A) und mit Urobilinogen (Kurve B) praktisch gleich ist. Lediglich bei einem Urin, der noch nicht näher bestimmte Urininhaltsstoffe enthält (Kurve C), ist eine Änderung der Remission zu beobachten. Diese Signaldifferenz dient dann zur Erkennung der Fehlfarbe, d.h. wenn bei der Messung bei $\lambda(T)$ ein bestimmter Remissionswert unterschritten wird, liegt eine Fehlfarbe vor. Das mit dem Photoempfänger z.B. einem Phototransistor empfangene Licht wird in üblicher Weise in auswertbare Signale umgewandelt.

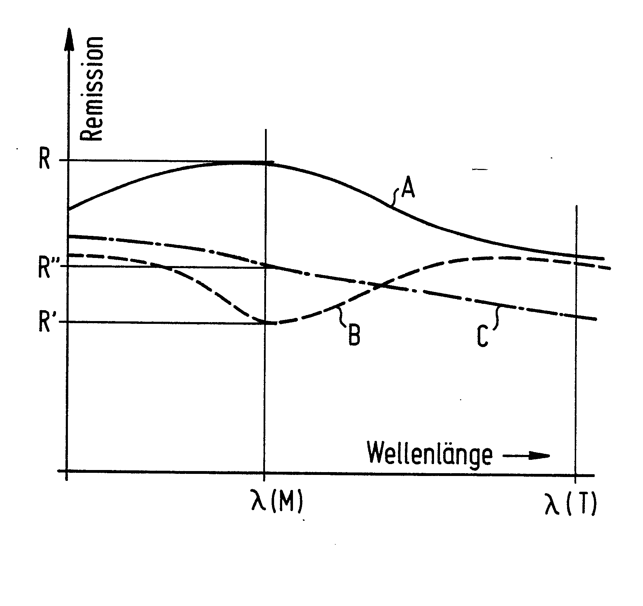

## Ansprüche

Verfahren zum photometrischen Auswerten von Farbfeldern auf Teststreifen, bei dem definiertes Licht $\lambda(M)$ einer Lichtquelle senkrecht auf das jeweilige Farbfeld eingestrahlt und das remittierte bzw. transmittierte Licht empfangen und in auswertbare Signale umgewandelt wird, dadurch gekennzeichnet, daß zusätzlich zum definierten Licht $\lambda(M)$ definiertes Licht $\lambda(T)$ einer zweiten Lichtquelle auf das jeweilige Farbfeld eingestrahlt und das remittierte bzw. transmittierte Licht empfangen und in auswertbare Signale umgewandelt wird.